# EUROPEAN PATENT APPLICATION

(11) **EP 2 469 130 A1**
(43) Date of publication of application: **27.06.2012**
(21) Application number: 10196130.8
(22) Date of filing: 21.12.2010
(51) Int. Cl.: F16H 63/18, F16H 63/46, F16H 63/34, B60W 30/18

(54) **Transmission control arrangement, transmission, vehicle and method for transmission control**

(71) Applicant: Saab Automobile AB, 461 80 Trollhättan (SE)
(72) Inventor: Björck, Per-Gunnar, 461 53, TROLLHÄTTAN (SE); Berndtson, Tobias, 467 91, GRÄSTORP (SE)
(74) Representative: Haag, Malina Anna

(57) **Abstract**

There is provided an automatic or semiautomatic transmission for a motorized vehicle, comprising a guide (106;206) which is arranged to receive and control the position of at least two guided members (110,120;220,230), wherein the position of a guided member controls the mode of operation of a predetermined actuation device (260,250;260,350) e.g. gear selector, clutch plate or park brake etc. By moving said guide relative said guided members, the guided members are synchronously arranged at sequential pairs of positions (P1-P8), wherein said pairs of positions correspond to predetermined combinations of modes of operations of said actuation devices. In this way a synchronized and sequential series of movements of at least two actuation devices is provided, which may synchronize the movement of e.g. a gear selector and a clutch such that a change from a first gear via a neutral gear to a second gear is provided.

## Description

### Technical field

The present invention generally relates to the field of control arrangements for automatic transmissions or semi-automatic transmissions for motorized vehicles. In particular it relates to arrangements for controlling the position of actuation members in said transmissions.

### Background of the invention

In a vehicle equipped with an automatic transmission, a shift lever is typically pivotable over a series of positions representative of transmission gears such as, for example, park (P), reverse (R), neutral (N), drive (D), and low gears (2, 1). The shift lever is operably connected to the motor vehicle transmission by a suitable mechanical linkage to effect actuation of the transmission to the selected gear when the shift lever is pivoted to the transmission gear's representative position.

Due to for example customer demands combined with the decreasing space in vehicle compartments, there is a desire to replace the traditional mechanical floor-mounted transmission shifters, normally located between the front passenger seats, by a transmission shifter which is electrically connected to the motor vehicle transmission and which may be placed more freely in the vehicle compartment . One example of an electrically connected transmission shifter is described in US 6 612 194.

However, in order for the system to work correctly the introduction of an electrically connected transmission shifter increases the number of components needed, and adds a bundle of control signals which need to be forwarded to devices acting on the mechanical transmission system. Consequently, the production costs and the possibility of component failure are also increased by the introduction of an electrically connected transmission.

Thus, there is a need to simplify the configuration of the transmission system.

### Summary of the invention

An object of the present invention is to overcome or at least alleviate the above mentioned problems and drawbacks, by providing a simplified transmission control arrangement for a motorized vehicle having an automatic or semi-automatic transmission.

These and other objects are met by the subject matters provided in the independent claims. Preferred embodiments of the invention are presented in the independent claims.

According to a first aspect thereof, the present invention relates to an automatic or semi-automatic transmission for a motorized vehicle having a control arrangement, which control arrangement comprises:
- a first guided member operatively connectable to a first actuation device, which actuation device has at least a first and a second predetermined modes of operation, which first and second predetermined modes of operation are different from each other;
- a second guided member operatively connectable to a second actuation device; which actuation device has at least a first and a second predetermined modes of operation, which first and second predetermined modes of operation are different from each other;
- said first actuation device being one of gear selecting means, clutch operating means and park locking means; and
- said second actuation device being one of gear selecting means, clutch operating means and park locking means, which is different from said first actuation device;
- a guide comprising a first guiding track and a second guiding track, wherein said first guiding track is arranged to receive said first guided member, and is arranged to be moveable relative said first guided member, and said second guiding track is arranged to receive said second guided member and is arranged to be moveable relative said second guided member;
   wherein
- said first guiding track connects a first set of positions comprising several first guided member positions, each first guided member position being arranged at a predetermined distance from a first reference, which distance corresponds to a predetermined mode of operation for said first actuation device;
- said second guiding track connects a second set of positions comprising several second guided member positions, each second guided member position being arranged at a predetermined distance from a second reference, which distance corresponds to a predetermined mode of operation for said second actuation device; and
- a control member arranged to move said guide relative said first and second guided members, and thereby synchronously arranging the first and second guided members at sequential pairs of respective first and second guided member positions, wherein said pairs of first and second guided member positions correspond to a predetermined combination of modes of operation of said first and second actuation devices.

As used herein the term automatic transmission refers to a vehicle transmission which automatically changes gear ratios as the vehicle moves, without any input from the driver.

As used herein the term semi-automatic transmission, refers to a vehicle transmission which uses electronic sensors, pneumatics, processors and actuators to execute gear shifts on the command of the driver. This removes the need for a clutch pedal which the driver otherwise needs to depress before making a gear change, since the clutch itself is actuated by electronic equipment which can synchronize the timing and torque required to make gear shifts quick and smooth. Many modern semi-automatic transmissions can also operate in the same manner as a conventional type of automatic transmission by allowing the transmission's computer to automatically change gear if.

In other words, said transmission system includes e.g. a dual clutch transmission system, a hybrid transmission system, or an automated manual transmission system.

As used herein the term gear selecting means refers to devices which are moved in order to change driving gears, such as a gear selector fork, shift sleeve or synchronizer ring.

As used herein the term clutch operating means refers to devices which are moved in order to switch a clutch between an open and closed condition and optionally additional conditions e.g. a condition where a slip clutch action is provided.

As used herein the term park locking means refers to devices which are moved in order to switch a parking brake between an unlocked and a locked condition.

According to a second aspect thereof, the present invention relates to a motorized vehicle comprising:
- a first actuation device being one of gear selecting means, clutch operating means and park locking means; and
- a second actuation device being one of gear selecting means, clutch operating means and park locking means, which is different from said first actuation device;
- a transmission arranged as described in relation to said first aspect wherein said first guided member is connected to said first actuation device, and said second guided member is connected to said second actuation device, and wherein said first actuation device and said second actuation devices each has at least a first and a second mode of operation.

According to one example, said motorized vehicle according is a passenger car, and preferably a passenger car seating 1 to 9 persons and more preferably a passenger car seating 1 to 5 persons, including the driver.

According to a third aspect thereof, the present invention relates to a method for transmission control in a motorized vehicle having an automatic or semi-automatic transmission, comprising:
- providing a guide, which comprises a first guiding track connecting a first set of positions and a second guiding track connecting a second set of positions;
- connecting a first guided member to said first guiding track, which first guided member is operably connected to a first actuation device;
- connecting a second guided member to said second guiding track, which second guided member is operably connected to a second actuation device;
- said first actuation device being one of gear selecting means, clutch operating means and park locking means; and
- said second actuation device being one of gear selecting means, clutch operating means and park locking means, which is different from said first actuation device;
- arranging said guide such that said first guided member is arranged at a respective first guided member position along said first guiding track, which position corresponds to a first mode of operation of said first actuation device,
- arranging said guide such that said second guided member is arranged at a respective second guided member position along said second guiding track, which position corresponds to a first mode of operation of said second actuation device,
- moving said guide relative said first and second guided members by means of a control member, and thereby synchronously arranging the first and second guided members at sequential pairs of respective first and second guided member positions, wherein said pairs of first and second guided member positions correspond to a predetermined combination of modes of operation of said first and second actuation devices.

According to one example said step of moving said guide comprises the step of rotating or translating said guide relative said first and second guided members.

According to a third aspect thereof, the present invention relates to a transmission control arrangement for a motorized vehicle having an automatic transmission comprising:
- a first guided member operatively connectable to a first actuation device, which actuation device has at least a first and a second predetermined modes of operation, which first and second modes of operation are different from each other;
- a second guided member operatively connectable to a second actuation device; which actuation device has at least a first and a second predetermined modes of operation, which first and second modes of operation are different from each other;
- said first actuation device being one of gear selecting means, clutch operating means and park locking means; and
- said second actuation device being one of gear selecting means, clutch operating means and park locking means, which is different from said first actuation device;
- a guide comprising a first guiding track and a second guiding track, wherein said first guiding track is arranged to receive said first guided member, and is arranged to be moveable relative said first guided member, and said second guiding track is arranged to receive said second guided member and is arranged to be moveable relative said second guided member; wherein
- said first guiding track connects a first set of positions comprising several first guided member positions, each first guided member position being arranged at a predetermined distance from a first reference, which distance corresponds to a predetermined mode of operation for said first actuation device;
- said second guiding track connects a second set of positions comprising several second guided member positions, each second guided member position being arranged at a predetermined distance from a second reference, which distance corresponds to a predetermined mode of operation for said second actuation device; and
- a control member arranged to move said guide relative said first and second guided members, and thereby synchronously arranging the first and second guided members at sequential pairs of respective first and second guided member positions, wherein said pairs of first and second guided member positions correspond to a predetermined combination of modes of operation of said first and second actuation devices.

In conventional systems there is provided a first control device for controlling the position of e.g. the gear selector fork, and a second control device for controlling the position of e.g. the clutch plate. The first and second control devices normally corresponding to a respective solenoid or motor which is coupled to a central processing unit (CPU) or an engine control unit (ECU). The transmission according to any of the first to fourth aspects described above, is advantageous as it e.g. enables a replacement of the first and second control devices by only one control member, which controls the position of the guide and thereby controls the position of e.g. both the gear selector fork and the clutch plate. This control member is normally connected to a CPU or ECU, which manages the control signal which controls the control device.

In other words, the production cost will normally be lower, the number of motors or solenoids will be lower, the amount of control signals will be lower as well as the number of failure modes.

According to one embodiment said control member is arranged to move said guide by rotating said guide around a stationary axis of rotation. Alternatively or additionally, said first guiding track has a substantially curved shape or substantially spiral shaped. Alternatively or additionally, said second guiding track has a substantially curved shape or substantially spiral shaped.

According to one embodiment said first and second references are reference points, and said first and second guiding tracks fully or partly encircle a respective one of said first and second reference points.

According to one embodiment said first and second references are reference lines; and/or said control member is arranged to move said guide by translating said guide along a stationary translation axis which preferably is parallel with at least one reference line. Alternatively or additionally, said first guiding track extend in a substantially first direction or has a substantially linear shape. Alternatively or additionally, said second guiding track extend in a substantially second direction or has a substantially linear shape.

According to one embodiment, said first reference and second reference are one and the same. In other word, said first reference and said second reference coincide with each other.

According to one embodiment, said guide is a plate or drum. According to one example, said guide is a plate and said first and second guiding tracks extend only in two dimensions. According to another example, said guide is a drum, and one or both of said first and second guiding tracks extend in three dimensions. Additionally or alternatively, said first and second guiding tracks, are substantially parallel with each other.

According to one embodiment said first guiding track is arranged to translate the first guided member only in one dimension or only along a first guided member axis. Additionally or alternatively, said second guiding track is arranged to move the second guided member only in one dimension or only along a second guided member axis. In other words, said first and/or said second guided member(s) are/is only moved side-ways.

According to one embodiment, the guide is arranged to move the first and second guided members a respective distance which is greater than 0.1, 0.5, 1, 3, 5, 10or 20 cm. Additionally or alternatively, the guide is arranged to move the first and second guided members a respective distance which is shorter than 5, 10, 20 cm. According to one example, the guide is arranged to move the first and second guided members a respective distance which is between 0.5 and 20 cm, or between 0.5 and 10 cm, or between 0.5 and 5 cm. The distance a member has been moved may be determined by identifying the position of a predetermined point on the member before the movement, and after the movement measuring the distance this point has been moved.

According to one embodiment, said first guided member and/or said second guided member are/is substantially bar-shaped.

According to one embodiment said first guiding track is arranged as an elongated recess or an elongated through hole in said guide. Additionally or alternatively said second guiding track is arranged as an elongated recess or an elongated through hole in said guide. Additionally or alternatively, said first guiding track or said second guiding track comprises an outer rim portion of said guide.

According to one example said first and/or second guided members are biased by e.g. spring action relative said plate, to facilitate that the guided member follows the track.

According to one embodiment, said first or second guiding track is arranged such that the friction between the respective guided member and the track increases as the guided member reaches one of the guided member positions. This may be achieved e.g. altering the direction of the track at the guided member position. It may also be achieved by providing a recess at a guided member position. Providing a recess at a guided member position is particularly advantageous when the track has a substantially constant extension, including a spiral shape.

According to one embodiment the guide comprises an additional third guiding track, which connects a third set of positions comprising several third guided member positions, each third guided member position being arranged at a predetermined distance from a third reference, which distance corresponds to a predetermined mode of operation for said third actuation device. Further, said third guiding track is arranged to receive a third guided member, and is arranged to be movable relative said third guided member. The third guided member is operatively connectable to a third actuation device, which actuation device has at least a first and a second predetermined mode of operation; said third actuation device being one of gear selecting means, clutch operating means and park locking means; which is different from said first and/or said second actuation device(s).

Said guide may also comprise, four, five, six or more guiding tracks, each arranged to receive a respective guiding member operatively connectable to an actuation device which may be of the same type as the actuation devices described above. Said actuation device may also be of a different type compared to the actuation devices described above.

All that has been stated above with reference to said first and second guiding tracks, also applies to any additional guiding tacks, mutatis mutandis.

In essence, the guide is arranged to receive and control the position of at least two guided members, wherein the position of a guided member controls the mode of operation of a predetermined actuation device, e.g. gear selector, clutch plate or park brake etc. By moving said guide relative said guided members, the guided members are synchronously arranged at sequential pairs of positions, wherein said pairs of positions correspond to predetermined combinations of modes of operations of said actuation devices. In this way a synchronized and sequential series of movements of at least two actuation devices is provided, which may synchronize the movement of e.g. a gear selector and a clutch such that a change from a first gear via a neutral gear to a second gear is provided.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic drawing illustrating a first example of said transmission control arrangement;
Fig. 2 schematically illustrates the transmission control arrangement of Figure 1, used in combination with a gear selector and a clutch plate;
Fig. 3 schematically illustrates a second example of said transmission control arrangement, when acting on a gear selector and parking brake.

### Detailed description of embodiments

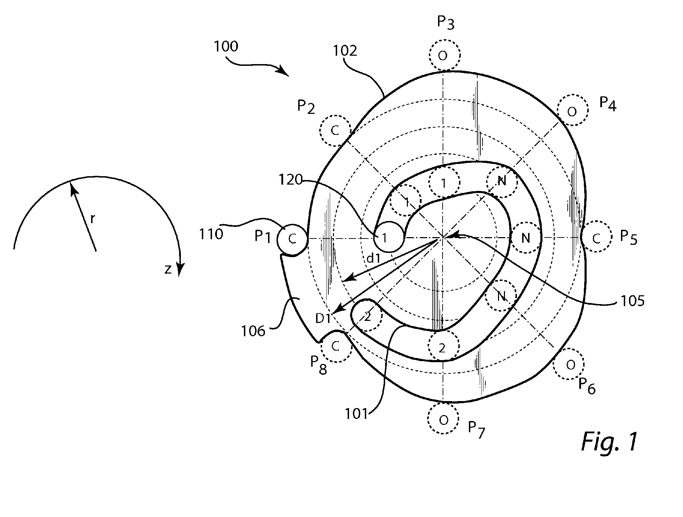

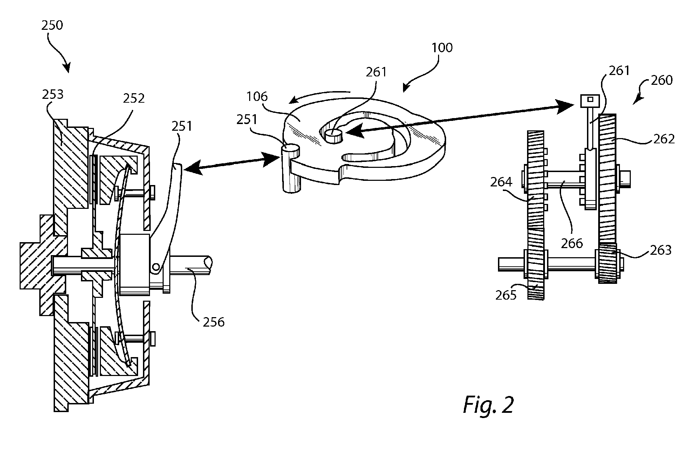

Figures 1 and 2 are schematic illustrations of a transmission control arrangement 100 for a motorized vehicle, which comprises a guide 110 here arranged as a disc. The guide has a first guiding track 101 and a second guiding track 102, wherein said first guiding track is a through hole in said guide, which through hole is substantially spiral shaped and extends roughly 315° around a reference 105, here a point coinciding with a centre of said guide. In other words, the first guiding track is delimited by two inner edges of said guide, and the distance from the reference 105 is partly constant and partly gradually increasing in a clockwise direction along said track, the properties of which is further described in the following. Said first and second guiding tracks are substantially parallel with each other. The distance from the reference 105 to the first position P1 of said inner track or first guiding track, is about half the distance from the reference 105 to the last position, or the eighth position P8, of said inner track. A first guided member 120, in this example a gear selector fork, is arranged in said first guiding track 101, and is further mechanically connected to a first actuation device, in this case gear selecting means, and here a gear selector 267 which is moveable along an axis 266 between a first gear wheel 262 and second gear wheel 264. The position of said gear selector 267 is determined by said gear selector fork 261, the position of which in turn is determined by the distance d1 between the reference 105 and said first guiding track 101. In this example, the distance d1 between the reference 105 and said first guiding track at said first position P1 is selected such that the gear selector engages said first gear wheel. This distance is also referred to as the first guided member distance. Hence, said gear selector is arranged in a first mode of operation, wherein it engages said first gear wheel.

By rotating said guide 45 ° counter-clockwise said first guided member is transferred to a second position P2 along said first guiding track, said second position being arranged on the same distance d1 from the reference 105, as said first position P1. Consequently, said gear selector remains in said first mode of operation while the guide is turned 90°, the axis of rotation coinciding with said reference 105.

By rotating said guide another 90° counter-clockwise, said first guided member is transferred from said second position P2 to a fourth position P4 along said first guiding track, which fourth position is arranged further from the reference 105 compared to said first and second positions P1, P2. This distance between the reference 105 and said third position P3 along said first guiding track is also referred to as a third first guided member distance d1. Consequently, the guide and the first guiding track act on the gear selector fork 261, which in turn acts and the gear selector 276 such that these are moved along said gear axis 266 towards said second gear wheel 264. The distance between the reference 105 and the fourth position P4 along said first guiding track is selected such that said gear selector is arranged between said first gear wheel and second gear wheel, engaging with neither of them. Thus, there is provided a second mode of operation for said first actuation device, a neutral gear.

By rotating said guide another 90° counter-clockwise, said first guided member is transferred from said fourth position P4 along said first guiding track, to a seventh position P7 along said first guiding track, which seventh position is arranged still further from the centre of said guide compared to said first and fourth position. This distance between the reference 105 and said second position P2 along said first guiding track is also referred to as a third first guided member distance d1. Consequently, the guide and the first guiding track act on the gear selector fork 261, which in turn acts on the gear selector 276, such that these are moved along said gear axis 266. The distance between the reference 105 and the seventh position P7 along said first guiding track is selected such that said gear selector engages with said second gear wheel 264. Hence, there is provided a third mode of operation for said first actuation device, a second gear. Further, said first, second and third positions P1-P3 along said first guiding tracks are arranged on the same first guiding member distance d1 from said reference 105. Said fourth, fifth and sixth positions P4-P6 are also arranged on the same second first guiding member distance d1 from said reference 105. Finally, said seventh and eighth positions P7-P8 are arranged on the same third first guiding member distance d1 from said reference 105. In summary providing three different modes of operation for said first actuation device. The eighth positions P1-P8 are substantially equally spaced around the guide.

In summary the guide may be rotated clockwise and counter-clockwise, such that said gear selector 261 is moved sidewise back and forth between its three modes of operation in a sequential manner.

Said guide 106 also comprises a second guiding track 102, which corresponds to the outer edge of said guide. The second guiding track encircles 315° of said guide, and is substantially cantered around said reference 105. The distance D1 between said reference 105 and the second guiding track is partly constant, partly gradually increasing and partly gradually decreasing along said track. The first, second, fifth and eighth positions P1, P2, P5 and P8 along said second guiding track are arranged at a first distance from said reference 105, which distance is also referred to as a first second guided member distance D1. The third, fourth, sixth and seventh positions P3, P4, P6, P7 along said second guiding track are arranged at a second distance from said reference 105, which distance is also referred to as a second guided member distance D1.

A second guided member 110, in this example a clutch operating member 251, is arranged in said second guiding track 102, and is further mechanically connected to a second actuation device 252, in this case a clutch operating means and here a clutch plate, which is moveable along an axis 256 between an open position and a closed position, in which closed position the clutch engages with a fly wheel mechanically connected to an engine. The position of said clutch plate 252 is determined by said clutch operating member 251, the position of which in turn is determined by the distance D1 between the reference 105 and said second guiding track 102 at the position of said second guided member 102. In this example, the first second guided member distance D1, as defined above, is selected such that said clutch plate 252 engages with said fly wheel 253. Hence, said clutch plate is arranged in a first mode of operation wherein it is closed. The second guided member distance D1, as defined above, is selected such that said clutch plate 252 is disengaged from said fly wheel 253. Hence, said clutch plate is arranged in a second mode of operation, wherein it is open.

By rotating said guide 90° counter-clockwise said second guided member 110 is transferred to a third position P3 along said second guiding track, which third position is arranged further from the reference 105 compared to said first and second positions P1, P2. Consequently, the guide and the second guiding track act on the clutch operating member 251, which in turn acts and the clutch plate 252 such that it is moved along said clutch axis 256 to engaging contact with said fly wheel 253.

Said second guided member is biased in a direction substantially orthogonal to the extension of said track, such that said second guided member closely follows the outer edge of said guide. Consequently, by rotating said guide another 90° counter-clockwise, said second guided member is transferred from said third position P3 along said first guiding track, to a sixth position P6 along said first guiding track, which sixth position is arranged at the same distance from said reference 105 as said first position P1. Hence, the second actuation device or the clutch plate is arranged in a first mode of operation, i.e. disengaged from said fly wheel.

In summary the guide may be rotated clockwise and counter-clockwise, such that said clutch plate 252 is moved sidewise back and forth between its two modes of operation in a sequential manner.

Furthermore, the guide may be rotated clockwise and counter-clockwise, such that said first guided member and said second guided member is moved between sequential pairs of respective first and second guided member positions. For the example given in Figure 1, the first sequential pair is P1, wherein said first guided member is arranged at a first guided member distance from said reference, and said first actuation device is in its first mode, i.e. engages said first gear wheel, at the same time said second guided member is arranged at a first second guided member distance from said reference, and said second actuation device is in its first mode, i.e. engages said first gear wheel.

**Table 1. The sequential pairs and the respective modes they correspond to**

| **Sequential pair** | **d1** | **Mode of First actuation device** | **D1** | **Mode of Second actuation device** |
|---|---|---|---|---|
| P1 | first distance | Gear 1 | First distance | Closed |
| P2 | first distance | Gear 1 | First distance | Closed |
| P3 | first distance | Gear 1 | Second distance | Open |
| P4 | second distance | Neutral | Second distance | Open |
| P5 | second distance | Neutral | First distance | Closed |
| P6 | second distance | Neutral | Second distance | Open |
| P7 | third distance | Gear 2 | Second distance | Open |
| P8 | third distance | Gear 2 | First distance | Closed |

By rotating said guide a synchronized and sequential series of movements of the two actuation devices is be provided, which without any other interaction provides a synchronized movement of the gear selector and the clutch such that a change from a first gear via a neutral gear to a second gear is provided.

As is indicated in Figure 1, said first and second guiding tracks 101, 102 may be provided with a recess at each of the guided member positions P1-P8 along the respective tracks. The recesses are intended to provide a slight hold or restriction on guide enabled by the respective guided members, by the increased friction provided between the guide and the guided member, such that the guide is hold in place until it is time for the next rotation of the guide. Furthermore, there are provided a respective stop at each end of the guide, such that the guide is prevented from being rotated more than in this case 315°.

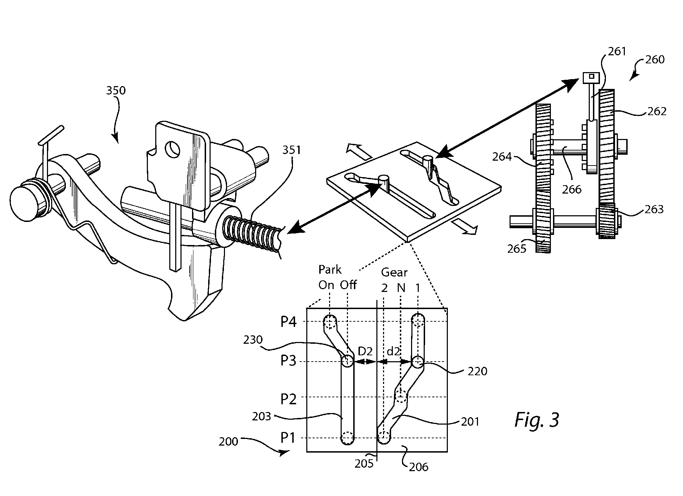

Figure 3 schematically illustrates an alternative embodiment, wherein the modes or positions of a parking brake 350 and a gear selector 360 are controllable by a guide 206, by moving the guide back and forth along one direction. The guide comprises a first guiding track 220, and a second guiding track 230, which extend in a respective substantially first and second direction. Both said tracks are arranged as elongated through holes in said guide. In other words, each one of the first and second guiding tracks is delimited by two inner edges of said guide. Said first and second guiding tracks are substantially parallel with each other. Further, said first and second guiding tracks 201, 202 extend substantially in parallel with a reference 205, here a line coinciding with the centre of said guide. The first guiding track connects four first guiding track positions P1-P4. A first guided member distance d2 from the reference 205, measured in a direction orthogonal to said reference or reference line, to the first guiding track is gradually increasing between the first three positions P1-P3, and is constant between positions P3 and P4. The second guiding track connects four second guiding track positions P1-P4. A second guided member distance from the reference 205, measured in a direction orthogonal to said reference or reference line, to the second guiding track is constant between the three first position P1 to P3, and gradually increasing between the two last positions P3-P4. Moreover, the positions P1-P4 are equally spaced apart, when measured along said reference 205, and the distance separating them is referred to as one separation distance. In other words, when measured in a direction parallel with said first reference, said first position P1 and said fourth position P4 are separated by three separation distances.

A first guided member 220, in this example a gear selector fork, is arranged in said first guiding track 201, and is further mechanically connected to a first actuation device, in this case a gear selector 267, in the same way as is described relation to Figure 1. In this example, the distance d2 between the reference 205 and said first guiding track 201 at said first position P1 is selected such that the gear selector engages with said second gear wheel 254. This distance d2 is also referred to as the first first guided member distance. Hence, said gear selector is arranged in a first mode of operation, wherein it engages said second gear wheel 264.

By translating said guide one separation distance in a direction parallel with said reference line 205, said first guided member is transferred from said first position to the second position P2 along said first guiding track, said second position being arranged on a second first guided member distance d2 from the reference 205. Consequently, the guide 206 and the first guiding track 201 act on the gear selector fork 261, which in turn acts and the gear selector 276 such that this is moved along said gear axis 266 towards said second gear wheel 264. The distance between the reference 205 and the second position P2 along said first guiding track 201 is selected such that said gear selector is arranged between said first gear wheel and second gear wheel, engaging with neither of them. Thus, there is provided a second mode of operation for said first actuation device, a neutral gear.

By translating said guide another one separation distance in a direction parallel with said reference line 205, said first guided member is transferred from said second position P2 to a third position P3 along said first guiding track, which third position is arranged still further from the reference 205 compared to said first and second positions P1, P2. This distance between the reference 205 and said third position P3 along said first guiding track is also referred to as a third first guided member distance d2. Consequently, the guide and the first guiding track act on the gear selector fork 261, which in turn acts and the gear selector 276 such that moved along said gear axis 266 towards said second gear wheel 264. The distance between the reference 205 and the third position P3 along said first guiding track is selected such that said gear selector engages with said second gear wheel 264. Hence, there is provided a third mode of operation for said first actuation device, a first gear.

By translating said guide yet another one separation distance in a direction parallel with said reference line 205, said first guided member is transferred from said third position P3 to a fourth position P4 along said first guiding track, said fourth position being arranged on the same distance d2 from the reference 205, as said third position P3. Consequently, said gear selector remains in said third mode of operation while the guide is translated one separation distance.

In summary the guide may be translated in a first direction wherein the guided members is transferred between positions having rising numerals, e.g. from P2 to P3; or in an opposite second direction wherein the guided member is transferred between positions having decreasing numerals, e.g. from P2 to P3, such that said gear selector 261 is moved sidewise back and forth between its three modes of operation in a sequential manner.

A second guided member 230, in this example a parking brake operating member, is arranged in said second guiding track 203, and is further mechanically connected to a second actuation device 350, in this case a parking brake 351, which is moveable along an axis between an open position and a locked position, in which locked position the parking brake prevents the vehicle from moving. The position of said parking brake is determined by said parking brake operating member, the position of which in turn is determined by the distance D2 between the reference 205 and said second guiding track at the position of said second guided member 203. In this example, the first second guided member distance D2, as defined above, is selected such that said parking brake 351 is disengaged or open. Hence, said parking brake is arranged in a first mode of operation wherein it is open or disengaged. The second second guided member distance D2, as defined above, is selected such that said parking brake is locked or engaged. Hence, said parking brake is arranged in a second mode of operation, wherein it is locked or engaged.

When said first, second and third positions P1-P3 are arranged on the same distance D2 from said reference, the mode of said second actuation device remains unchanged, as the guide is translated one or two separation distances from said first position P1. By translating said guide one separation distance from said third position, said second guided member 230 is transferred to said fourth position P4 along said second guiding track, which fourth position is arranged further from the reference 105 compared to said first, second and third positions P1, P2, P3. Consequently, the guide and the second guiding track act on the parking brake operating member, which in turn acts and the parking brake such that it is moved into a locked position.

By providing that the direction of at least one of the tracks is altered at each of the guided member positions, the friction between the guided member and the plate is increased, which give rise to is a slight hold or restriction on guide enabled by the respective guided members, such that the guide is hold in place until it is time for the next movement of the guide. Furthermore, there are provided a respective stop at each end of the guides.

In summary the guide may be translated in a first direction wherein the guided members is transferred between positions having rising numerals, e.g. from P3 to P4; or in an opposite second direction wherein the guided members is transferred between positions having decreasing numerals, e.g. from P4 to P3, such that said gear selector 261 is moved sidewise back and forth between its two modes of operation.

Furthermore, the guide may be translated in said first and second direction, such that said first guided member and said second guided member is moved between sequential pairs of respective first and second guided member positions, which is also described by Table 2.

**Table 2. The sequential pairs and the respective modes they correspond to**

| **Sequential pair** | **d2** | **Mode of First actuation device** | **D2** | **Mode of Second actuation device** |
|---|---|---|---|---|
| P1 | first distance | Gear 2 | first distance | Unlocked |
| P2 | second distance | Neutral | first distance | Unlocked |
| P3 | third distance | Gear 1 | first distance | Unlocked |
| P4 | third distance | Gear 1 | second distance | Locked |

By translating said guide in said first direction or a direction opposite thereto a synchronized and sequential series of movements of the two actuation devices is provided, such that a change from a second gear via a neutral gear to a first gear and there after an activation of the parking brake is provided. The sequence may also be performed in reversed order, starting with the parking brake being unlocked.

Additionally, a further third guiding track may be provided e.g. as an inner track, and this inner track may be arranged to receive a third guided member which is connected to a third actuation device. According to one example, the three actuation devices are a respective one of a gear selecting means, parking means and clutch means, such that a control of these three may be provided by the guide. In other words, a synchronized sequence may be provided may by which the clutch, gear selector and parking brake is automatically controlled, such that a change of gears between said first, neutral and second gear facilitated by said clutch is provided, as well as an automatic locking of the parking brake when the vehicle stops. In more detail, this may achieved by adding a further inner guiding track to the guide described in relation to Figure 1 and 2, and connecting a third guided member to this track, which third guided member is operatively connected to a parking brake as described in relation to Figure 3. This third guiding track is preferably spiral shaped as described in relation to Figure 1 and 2, and alters the mode of the third actuation device only after said gear selector engages with said first gear wheel, as is described in relation to Figure 3.

Alternatively, a third guiding track is added to the guide described in relation to Figure 3, which is substantially parallel with said first and second guiding tracks, and which controls the position of a clutch operating member in synchronization with a gear selector e.g. as described in relation to Figure 1 and 2.

Further, the guides described above may be connected to a control member, which in turn is connected to a processing unit, which unit manages control signals indicative of when it is time to move the guide and preferably also indicative of which position the guide is to be moved to. In other words, when the control member receives a control signal indicative of to which position the guide is to be moved, or in which direction the guide is to be moved, it acts in line with this indication and moves the guide. The clutch and gears are then controlled in a suitable manner and may be arranged to provide a slip-start of the engine if necessary.

In the above description, the invention has mainly been described with reference to a number of explicitly disclosed embodiments. However, as is readily appreciated by a person skilled in the art, embodiments other than the ones disclosed above are equally possible within the scope of the invention, as defined by the appended patent claims. E.g. the guide may be arranged as a drum, and the tracks arranged such that the guided members are moved in three dimension. Further, the reference may be arranged off-centre relative said guide.

## Claims

1. An automatic or semi-automatic transmission for a motorized vehicle having a control arrangement (100;200) comprising:
- a first guided member (120; 220) operatively connectable to a first actuation device (260), which actuation device has at least a first and a second predetermined mode of operation;
- a second guided member (110;230) operatively connectable to a second actuation device (250); which actuation device has at least a first and a second predetermined mode of operation;
- said first actuation device (260) being one of gear selecting means, clutch operating means and park locking means; and
- said second actuation device (250) being one of gear selecting means, clutch operating means and park locking means, which is different from said first actuation device;
- a guide (106;206) comprising a first guiding track (101;201) and a second guiding track (102;203), wherein said first guiding track is arranged to receive said first guided member (120;220), and is arranged to be moveable relative said first guided member (120;220), and said second guiding track (102;203) is arranged to receive said second guided member (110;230) and is arranged to be moveable relative said second guided member (110;230);
wherein
- said first guiding track (101;201) connects a first set of positions comprising several first guided member positions (P1-P8; P'1-P'4), each first guided member position being arranged at a predetermined distance (d1;d2) from a first reference (105; 205), which distance corresponds to a predetermined mode of operation for said first actuation device (260);
- said second guiding track (102;203) connects a second set of positions comprising several second guided member positions (P1-P8; P'1-P'4), each second guided member position being arranged at a predetermined distance (D1;D2) from a second reference (105; 205), which distance corresponds to a predetermined mode of operation for said second actuation device (250); and
- a control member arranged to move said guide (106; 206) relative said first and second guided members (110,120;220,230), and thereby synchronously arranging said first and second guided members (110,120;220,230) at sequential pairs of respective first and second guided member positions (P1-P8; P'1-P'4), wherein each of said pairs of first and second guided member positions correspond to a predetermined combination of modes of operation of said first and second actuation devices (250, 260).

2. An automatic or semi-automatic transmission according to claim 1, wherein said control member is arranged to move said guide (106;206) by rotating said guide around a stationary axis of rotation (105), and/or
wherein said first guiding track (101;201) has a substantially curved shape or substantially spiral shaped, and/or
wherein said second guiding track (102;203) has a substantially curved shape or substantially spiral shaped,

3. An automatic or semi-automatic transmission according to claim 1 or 2, wherein said first and second references are reference points (106;206), and said first and second guiding tracks (101,102;202,203) fully or partly encircle a respective one of said first and second reference points (105;205).

4. An automatic or semi-automatic transmission according to claim 1, wherein said first and second references (105;205) are reference lines; and/or wherein said control member is arranged to move said guide (106;206) by translating said guide along a stationary translation axis which preferably is parallel with at least one of said reference lines (205), and/or
wherein said first guiding track (101,201) extend in a substantially first direction or has a substantially linear shape, and/or
wherein said second guiding track (102;203) extend in a substantially second direction or has a substantially linear shape.

5. An automatic or semi-automatic transmission according to any one of the preceding claims, wherein said first reference and second references (105;205) are one and the same.

6. An automatic or semi-automatic transmission according to any one of the preceding claims, wherein said guide (106; 206) is a plate or drum.

7. An automatic or semi-automatic transmission according to any one of the preceding claims, wherein said first guiding track (101, 201) is arranged to move said first guided member (120;220) along only a first axis; and/or
wherein said second guiding track (110;230) is arranged to move the second guided member along only a second axis.

8. An automatic or semi-automatic transmission according to any one of the preceding claims, wherein said first guiding track (120;220) is arranged as an elongated recess or an elongated through hole in said guide (106;206) ; and/or
wherein said second guiding track (110;230) is arranged as an elongated recess or an elongated through hole in said guide (106;206); and/or
wherein said first guiding track (120;220) or said second guiding track (110;230) comprises an outer rim portion of said guide.

9. An automatic or semi-automatic transmission according to any one of the preceding claims, further comprising a third guided member operatively connectable to a third actuation device, which actuation device has at least a first and a second predetermined mode of operation;
said third actuation device being one of gear selecting means, clutch operating means and park locking means; which is different from both said first and second actuation devices;
wherein said guide further comprises a third guiding track, which connects a third set of positions comprising several third guided member positions, each third guided member position being arranged at a predetermined distance from a third reference, which distance corresponds to a predetermined mode of operation for said third actuation device; and
which guiding track is arranged to receive said third guided member, and is arranged to be movable relative said third guided member.

10. A motorized vehicle comprising:
- a first actuation device being one of gear selecting means, clutch operating means and park locking means; and
- a second actuation device being one of gear selecting means, clutch operating means and park locking means, which is different from said first actuation device;
- an automatic or semi-automatic transmission according to any one of claims 1-9 wherein said first guided member is connected to said first actuation device, and said second guided member is connected to said second actuation device, and
wherein said first actuation device and said second actuation device each has at least a first and a second mode of operation.

11. A motorized vehicle according to claim 10, wherein said motorized vehicle is a passenger car, and preferably a passenger car seating 1 to 9 persons and more preferably a passenger car seating 1 to 5 persons.

12. A method for transmission control in a motorized vehicle having an automatic transmission, comprising:
- providing a guide (106;206), which comprises a first guiding track (101;201) connecting a first set of positions (P1-P8;P'1-P'4) and a second guiding track (102;203) connecting a second set of positions (P1-P8;P'1-P'4);
- connecting a first guided member (120;220) to said first guiding track (101;201), which first guided member is operably connected to a first actuation device;
- connecting a second guided member (110;230) to said second guiding track (102;203), which second guided member is operably connected to a second actuation device;
- said first actuation device being one of gear selecting means, clutch operating means and park locking means; and
- said second actuation device being one of gear selecting means, clutch operating means and park locking means, which is different from said first actuation device;
- arranging said guide (106;206) such that said first guided member (120;220) is arranged at a respective first guided member position (P1 ;P'1) along said first guiding track (101, 201), which position corresponds to a first mode of operation of said first actuation device,
- arranging said guide (106;206) such that said second guided member (110;230) is arranged at a respective second guided member position (P1;P'1) along said second guiding track, which position corresponds to a first mode of operation of said second actuation device,
- moving said guide (106;206) relative said first and second guided members (110, 120;220; 230) by means of a control member, and thereby synchronously arranging said first and second guided members (110, 120;220; 230) at sequential pairs of respective first and second guided member positions (P1-P8;P'1-P'4), wherein each of said pairs of first and second guided member positions correspond to a predetermined combination of modes of operation of said first and second actuation devices.

13. A method for transmission control according to claim 14, wherein said step of moving said guide comprises the step of rotating or translating said guide relative said first and second guided members.

14. An transmission control arrangement (100;200) for a motorized vehicle having an automatic or semi-automatic transmission, comprising:
- a first guided member (120; 220) operatively connectable to a first actuation device (260), which actuation device has at least a first and a second predetermined modes of operation;
- a second guided member (110;230) operatively connectable to a second actuation device (250); which actuation device has at least a first and a second predetermined modes of operation;
- said first actuation device (260) being one of gear selecting means, clutch operating means and park locking means; and
- said second actuation device (250) being one of gear selecting means, clutch operating means and park locking means, which is different from said first actuation device;
- a guide (106;206) comprising a first guiding track (101;201) and a second guiding track (102;203), wherein said first guiding track is arranged to receive said first guided member (120;220), and is arranged to be moveable relative said first guided member (120;220), and said second guiding track (102;203) is arranged to receive said second guided member (110;230) and is arranged to be moveable relative said second guided member (110;230);
wherein
- said first guiding track (101;201) connects a first set of positions comprising several first guided member positions (P1-P8; P'1-P'4), each first guided member position being arranged at a predetermined distance (d1;d2) from a first reference (105; 205), which distance corresponds to a predetermined mode of operation for said first actuation device (260);
- said second guiding track (102;203) connects a second set of positions comprising several second guided member positions (P1-P8; P'1-P'4), each second guided member position being arranged at a predetermined distance (D1;D2) from a second reference (105; 205), which distance corresponds to a predetermined mode of operation for said second actuation device (250); and
- a control member arranged to move said guide (106; 206) relative said first and second guided members (110,120;220,230), and thereby synchronously arranging said first and second guided members (110,120;220,230) at sequential pairs of respective first and second guided member positions (P1-P8; P'1-P'4), wherein each of said pairs of first and second guided member positions correspond to a predetermined combination of modes of operation of said first and second actuation devices (250, 260).
